# EUROPEAN PATENT APPLICATION

(11) **EP 4 741 261 A1**
(43) Date of publication of application: **13.05.2026**
(21) Application number: 24211645.7
(22) Date of filing: 08.11.2024
(51) Int. Cl.: B62D 7/02, B62D 11/00

(54) **OMNIDIRECTIONAL WHEEL ARRANGEMENT**

(71) Applicant: Siemens Healthineers AG, 91301 Forchheim (DE)
(72) Inventor: Bin Wan Nizar, Wan Muhammad Iqmal, 97421 Schweinfurt (DE); Gkekas, Konstantinos, 95448 Bayreuth (DE); Dr. Newrzella, Sebastian, 95447 Bayreuth (DE); Zeidler, Josef, 95615 Marktredwitz (DE)
(74) Representative: Siemens Healthineers Patent Attorneys

(57) **Abstract**

An omnidirectional wheel arrangement (1) comprises a first wheel (3a), a second wheel (3b), and a propulsion drive system (7a, 7b, 19, 20, 21, 22) to drive the first wheel (3a) to rotate around a first wheel axis (4a). The wheels (3a, 3b) are rotatable around a first steering axis (6a) and a second steering axis (6b) and a steering drive system (9, 9', 10, 17a, 17b) is configured to rotate the wheels (3a, 3b) around the steering axes (6a, 6b). The second steering axis (6b) is different from and parallel to the first steering axis (6a), the first steering axis (6a) is perpendicular to the first wheel axis (4a), and the second steering axis (6b) is perpendicular to the second wheel axis (4b). The wheels (3a, 3b) are coupled by the steering drive system (9, 9', 10, 17a, 17b) to enforce that the wheel axes (4a, 4b) are parallel.

## Description

The present invention is directed to an omnidirectional wheel arrangement for a vehicular device comprising a carrier for mounting the omnidirectional wheel arrangement to the vehicular device, a first wheel with a first wheel axis, and a second wheel with a second wheel axis. The invention is further directed to a vehicular device comprising said omnidirectional wheel arrangement.

In the modern clinical setting, autonomous or semi-autonomous mobile medical devices, such as hospital beds, patient tables or mobile medical imaging devices, become more and more common. Such devices may for example be equipped with an omnidirectional drive system, for example based on so-called Mecanum wheels, also denoted as lion wheels. Ilon wheels may be driven by respective motors to allow the device to travel along arbitrary directions autonomously or semi-autonomously. Due to the asymmetric construction of the lion wheel, four individually driven wheels are required to achieve a resulting frictional force along any direction to enable the omnidirectional translational movement and a net torque to allow for a rotational movement. Consequently, four motors are required.

Furthermore, the design of an lion wheel is comparatively complex since it comprises a plurality of individual rolls arranged along the circumference of the wheel, which makes the wheel prone to soiling, which could reduce the reliability or smoothness of the motion.

It is an objective of the present invention to provide an improved concept for an omnidirectional wheel arrangement for a vehicular device, which overcomes the drawbacks of Ilon wheels at least in part.

This objective is achieved by the subject matter of the independent claim. Further implementations and preferred embodiments are subject matter of the dependent claims.

The invention is based on the idea to provide two actively driven wheels, each wheel being able to rotate not only around its respective wheel axis but also around a steering axis, which is perpendicular to the wheel axis, and to couple the two wheels to each other to enforce that the wheel axes are parallel to each other.

According to an aspect of the invention, a wheel arrangement for a vehicular device, in particular an omnidirectional wheel arrangement for a vehicular device, is provided. The omnidirectional wheel arrangement comprises a carrier for mounting the omnidirectional wheel arrangement to the vehicular device, a first wheel with a first wheel axis, a second wheel with a second wheel axis, and a propulsion drive system. The propulsion drive system is configured to drive the first wheel and the second wheel individually to rotate the first wheel around the first wheel axis and the second wheel around the second wheel axis. The first wheel is mounted to the carrier such that the first wheel is rotatable around a first steering axis, the second wheel is mounted to the carrier such that the second wheel is rotatable around a second steering axis, and the omnidirectional wheel arrangement comprises a steering drive system. The steering drive system is configured to rotate the first wheel around the first steering axis and the second wheel around the second steering axis. Therein, the second steering axis is different from the first steering axis and parallel to the first steering axis, the first steering axis is perpendicular to the first wheel axis, and the second steering axis is perpendicular to the second wheel axis. The first wheel and the second wheel are coupled to each other by the steering drive system to enforce that the first wheel axis and the second wheel axis are parallel to each other.

In other words, the steering drive system is designed and configured to enforce that the first wheel axis and the second wheel axis are parallel to each other by coupling the first wheel and the second wheel to each other. In yet other words, the steering drive system is designed and configured to enforce that a rotational position of the first wheel around the first steering axis is equal to a rotational position of the second wheel around the second steering axis, for example up to multiples of 180°.

Here and in the following, the expressions perpendicular and parallel may be understood to include usual tolerances, for example in the order of one degree or few degrees, for example [0°, 10°].

Here and in the following, a vehicular device may be understood as a device with a self-propulsion. An omnidirectional wheel arrangement for a vehicular device may be understood as a wheel arrangement which implements the self-propulsion at least in part and, when mounted accordingly to the vehicular device, enables the vehicular device to carry out a translational movement along arbitrary directions and a rotation of the vehicle or device. The rotation of the vehicular device is not necessarily a rotation on the spot.

A wheel axis may be understood as an axis of rotation of the respective wheel wherein, if the wheel has contact to a ground surface at a rolling surface of the wheel, a rotation of the wheel around the wheel axis leads to a propulsion of the wheel.

Here and in the following, a drive system comprises at least one motor and may, depending on the actual implementation, comprise further components including for example one or more transmissions. The propulsion drive system comprises, in particular, at least two motors, namely a first motor arranged and configured to drive the first wheel and a second motor arranged and configured to drive the second wheel. The omnidirectional wheel arrangement or the propulsion drive system comprises a motor controller, which is configured to drive at least two motors of the propulsion drive system. In particular, the motor controller is configured to drive the first wheel and the second wheel independently of each other or, in other words, individually, such that the direction of rotation around the respective wheel axis may be the same or may be different for the two wheels. For example, also the speed of rotation around the respective wheel axis may be the same or may be different for the two wheels. Since the first wheel and the second wheel may be driven for propulsion individually, they may also be denoted as active wheels in contrast to passive wheels.

The omnidirectional wheel arrangement or the steering drive system comprises, in particular, a further motor controller, which is configured to drive at least one motor of the steering drive system, or the motor controller is configured to drive the at least one motor of the propulsion drive system and the at least one motor of the steering drive system.

The steering drive system is configured to rotate the first wheel around the first steering axis and the second wheel around the second steering axis. To this end, the steering drive system may drive the first wheel and the second wheel individually or in a coupled fashion such that a rotation of the first wheel around the first steering wheel axis is always associated with a rotation of the second wheel around the second steering axis.

A motor controller is, in particular, a data processing system. In the present disclosure, the terms "data processing system" and "at least one data processing device" can be used interchangeably. In particular, a data processing device can be understood to mean a data processing device that contains a processing circuit. The data processing device can therefore, in particular, process data for the purpose of performing computing operations. This may also include operations for performing indexed access to a data structure, for example a look-up table, LUT, as well as a data processing method implemented in hardware.

The data processing device may include, in particular, one or more computers, one or more microcontrollers and/or one or more integrated circuits, for example one or more application-specific integrated circuits, ASIC, one or more field-programmable gate arrays, FPGA, and/or one or more systems-on-a-chip, SoC. The data processing device may also include one or more processors, for example one or more microprocessors, one or more central processing units, CPUs, one or more graphics processing units, GPUs, and/or one or more signal processors, in particular one or more digital signal processors, DSPs. The data processing device may also include a physical or virtual network of computers or other of the mentioned units.

In various embodiments, the data processing device includes one or more hardware and/or software interfaces and/or one or more storage units.

A storage unit may be a volatile data memory, for example a dynamic random access memory, DRAM, or a static random access memory, SRAM, or a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

That the second steering axis is parallel to the first steering axis, the first steering axis is perpendicular to the first wheel axis, and the second steering axis is perpendicular to the second wheel axis, is, in particular, achieved by construction of the wheel arrangement.

The first wheel and the second wheel are coupled to each other by the steering drive system. This may be achieved by a mechanical coupling element of the steering drive system. Alternatively or in addition, the motor controller or further motor controller may be configured to drive the first wheel and the second wheel individually but in a synchronized manner such that the first wheel axis and the second wheel axis are enforced to be parallel to each other. In particular, due to mounting of the first wheel and the second wheel to the carrier such that they can rotate around the respective steering axis, the first wheel axis and the second wheel axis could include an arbitrary angle if the first wheel and the second wheel were not coupled to each other by the steering drive system. Due to the coupling, the first wheel and the second wheel are rotated in a synchronized manner around the steering axes.

By the synchronized rotation of the first wheel and the second wheel around the first steering axis and the second steering axis, respectively, the propulsion direction is defined. By rotating the first wheel and the second wheel with the same speed in the same direction around the respective wheel axes, a translational movement of the vehicular device in arbitrary directions is enabled. Furthermore, by rotating the wheels around the steering axes simultaneously to the propulsion by rotating the wheels around the wheel axes, a rotational movement is possible. Furthermore, by rotating the wheels around the wheel axes in opposite directions, a rotation of the vehicular device on the spot is possible. It is noted, however, that for such a rotation on the spot it may be necessary to rotate the wheels around the steering axes first. In particular, a rotation on the spot is possible if the first wheel axis and the second wheel axis coincide.

By means of the omnidirectional wheel arrangement according to the invention, only three individual rotations need to be implemented, namely the rotation of the first wheel around the first wheel axis, the rotation of the second wheel around the second wheel axis, and the coupled rotation of the first and the second wheel around the steering axes. Thus, only three motors are required. Furthermore, compared to Ilon wheels, the design of the first and the second wheel may be much simpler as it is not required to provide multiple rollers for a single wheel. In particular, the first wheel and the second wheel each may comprise only a single roller in several embodiments of the omnidirectional wheel arrangement.

It is noted that the vehicular device may comprise one or more passive wheels or other supporting elements, such as gliders, for supporting the vehicular device on the ground surface. In particular, it may be beneficial to provide at least two or at least three such supporting elements to ensure a stable placement of the vehicular device on the ground surface. In some embodiments, such passive wheels or other supporting elements may be comprised by the omnidirectional wheel arrangement.

According to several embodiments, the propulsion drive system comprises a first motor arranged and configured to drive the first wheel to rotate around the first wheel axis and a second motor arranged and configured to drive the second wheel around the second wheel axis.

According to several embodiments, the steering drive system comprises at least one further motor to drive the first wheel to rotate around the first steering axis and the second wheel to rotate around the second steering axis.

According to several embodiments, the first steering axis intersects the first wheel axis and/or the second steering axis intersects the second wheel axis.

In other words, the first steering axis passes through a center of the first wheel and the second steering axis passes through a center of the second wheel. Consequently, when rotating the respective wheel around the respective steering axis, the motion is a purely rotational motion without a translational component or, in other words, a rotation of the respective individual wheel on the spot.

As a consequence, the direction of propulsion of the whole omnidirectional wheel arrangement or the whole vehicular device, respectively, may be changed faster or, in other words, with a shorter delay.

According to several embodiments, the steering drive system is configured to rotate the first wheel and the second wheel individually around the first steering axis and the second steering axis, respectively, such that it is enforced that the first wheel axis and the second wheel axis are parallel to each other.

In other words, the steering drive system or, in particular, the motor controller or the further motor controller controls the rotation of the first wheel around the first steering axis and of the second wheel around the second steering axis such that both wheel axes remain parallel to each other.

In particular, the steering drive system comprises a first further motor, which is arranged and configured to rotate the first wheel around the first steering axis, and a second further motor, which is arranged and configured to rotate the second wheel around the second steering axis.

In such embodiments, it is not necessary that the first wheel and the second wheel are coupled by an additional mechanical coupling element, which may simplify the overall construction of the omnidirectional wheel arrangement.

According to several embodiments, the steering drive system comprises a mechanical coupling element, which couples the first wheel and the second wheel to each other to enforce that the first wheel axis and the second wheel axis are parallel to each other.

In such embodiments, only a single further motor of the steering drive system is required to rotate both the first wheel and the second wheel around their respective steering axis in a synchronized manner to enforce the two wheel axes being parallel. Consequently, the motor controller or the further motor controller may be designed in a more simple manner and costs may be reduced since only a single further motor is required.

According to several embodiments, the mechanical coupling element comprises a transmission belt, such as a V-belt, a timing belt or a nobbed belt, or a transmission chain or a gearbox or a Cardan shaft.

According to several embodiments, the omnidirectional wheel arrangement comprises a first roller mounted to the carrier such that the first roller is rotatable around the first steering axis and the first roller is mechanically coupled to the first wheel such that a rotation of the first roller around the first steering axis causes the first wheel to rotate around the first steering axis. The omnidirectional wheel arrangement comprises a second roller mounted to the carrier such that the second roller is rotatable around the second steering axis and the second roller is mechanically coupled to the second wheel such that a rotation of the second roller around the second steering axis causes the second wheel to rotate around the second steering axis. The mechanical coupling element comprises the transmission belt or the transmission chain and couples the first roller to the second roller and the steering drive system is configured to drive the first roller to rotate around the first steering axis or to drive the second roller to rotate around the second steering axis or to drive the mechanical coupling element, in particular in order to rotate the first roller around the first steering axis and the second roller around the second steering axis. The mechanical coupling element may for example comprise the transmission belt.

In this way a simple and robust mechanical coupling of the first wheel and the second wheel to each other is realized.

According to several embodiments, the omnidirectional wheel arrangement comprises a first gear mounted to the carrier such that the first gear is rotatable around the first steering axis and the first gear is mechanically coupled to the first wheel such that a rotation of the first gear around the first steering axis causes the first wheel to rotate around the first steering axis. The omnidirectional wheel arrangement comprises a second gear mounted to the carrier such that the second gear is rotatable around the second steering axis and the second gear is mechanically coupled to the second wheel such that a rotation of the second gear around the second steering axis causes the second wheel to rotate around the second steering axis. The mechanical coupling element comprises the transmission belt or the transmission chain and couples the first gear to the second gear and the steering drive system is configured to drive the first gear to rotate around the first steering axis or to drive the second gear to rotate around the second steering axis or to drive the mechanical coupling element, in particular in order to rotate the first gear around the first steering axis and the second gear around the second steering axis. The mechanical coupling element may for example comprise the transmission chain.

In this way a simple and robust mechanical coupling of the first wheel and the second wheel to each other is realized.

According to several embodiments, the omnidirectional wheel arrangement comprises at least one support element, for example at least three or at least four support elements, for supporting the omnidirectional wheel arrangement on a ground surface, in particular, when the omnidirectional wheel arrangement or the vehicular device is placed on the ground surface.

In this way, the stability of the vehicular device is further increased and, as described above, in embodiments where the first wheel and the second wheel are mounted floatingly or spring-mounted at the carrier, the load to the first wheel and the second wheel due to the weight of the vehicular device may be reduced. Consequently, less powerful motors are required to drive the first wheel and the second wheel.

According to several embodiments, the omnidirectional wheel arrangement, in particular the at least one support element, comprises at least one further wheel mounted to the carrier, wherein each further wheel of the at least one further wheel is a passive wheel and is rotatable, in particular freely rotatable, around a respective further steering axis, which is parallel to the first steering axis. For example, the at least one further wheel comprises three or four further wheels.

In this way, a particularly smooth travel movement of the vehicular device is achieved and at the same time the stability of the vehicular device is increased due to the supporting effect of the at least one further wheel.

A passive wheel may for example be understood as a wheel which is not drivable by a motor or not driven by a motor. In other words, the omnidirectional wheel arrangement and the vehicular device do, for example, not comprise a motor which is arranged and configured to drive the passive wheel.

For example, the three further wheels or the four further wheels are arranged at respective corners of a rectangle. The first wheel and the second wheel are arranged symmetrically with respect to a center of the rectangle.

The stability of the vehicular device is thereby further increased.

For example, the center of the first wheel and the center of the second wheel may be arranged mirror symmetrically with respect to a symmetry plane, which is parallel to the first steering axis and the second steering axis and bisects two opposite sides of the rectangle.

According to several embodiments, the first wheel is mounted floatingly or spring-mounted at the carrier, in particular, such that the first wheel may move with respect to the carrier along a direction parallel to the first steering axis. Alternatively or in addition, the second wheel is mounted floatingly or spring-mounted at the carrier, in particular, such that the second wheel may move with respect to the carrier along a direction parallel to the second steering axis.

In this way, the distance of the contact points of the wheels with the ground surface from the carrier may be adjusted by adjusting a counterforce acting against the weight of the vehicular device. In this way, the load on the first wheel or the second wheel due to a weight of the vehicular device may be adjusted in particular in case the one or more further support elements are provided. In this way, it is possible to reduce the load on the first wheel and the second wheel, which may be beneficial to reduce vibrations during the travel movement of the vehicular device.

According to a further aspect of the invention a vehicular device comprising an omnidirectional wheel arrangement according to the invention is provided. Therein, the carrier is mounted to the vehicular device.

According to several embodiments, the vehicular device is a mobile medical device, in particular a hospital bed or a mobile medical imaging device, for example a mobile C-arm X-ray device or a mobile X-ray angiography device, or a patient table or a robotic system for medical interventions.

According to several embodiments, the omnidirectional wheel arrangement is implemented such that it comprises the at least one further wheel. The first wheel and the second wheel and the at least one further wheel is mounted at the carrier such that, when the vehicular device is placed on a ground surface such that the first wheel and the second wheel and the at least one further wheel are in contact with the ground surface, a mechanical load on the first wheel due to a weight of the vehicular device is less than a mechanical load on each further wheel of the at least one further wheel and/or a mechanical load on the second wheel due to the weight of the vehicular device is less than the mechanical load on each further wheel of the at least one further wheel.

Consequently a wear of the first wheel and the second wheel and/or the propulsion drive system and/or the steering drive system is reduced. Furthermore, vibrations are reduced when the vehicular device is traveling.

Further implementations of the vehicular device according to the invention follow directly from the various embodiments of the omnidirectional wheel arrangement according to the invention and vice versa. In particular, individual features and corresponding explanations as well as advantages relating to the various implementations of the omnidirectional wheel arrangement according to the invention can be transferred analogously to corresponding implementations of the vehicular device according to the invention.

Further features and feature combinations of the invention are obtained from the figures and their description as well as the claims. In particular, further implementations of the invention may not necessarily contain all features of one of the claims. Further implementations of the invention may comprise features or combinations of features, which are not recited in the claims.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
- FIG 1: shows schematically an exemplary embodiment of an omnidirectional wheel arrangement for a vehicular device according to the invention;
- FIG 2: shows schematically an exemplary embodiment of a vehicular device according to the invention;
- FIG 3: shows schematically a further exemplary embodiment of an omnidirectional wheel arrangement for a vehicular device according to the invention;
- FIG 4: shows schematically a further exemplary embodiment of an omnidirectional wheel arrangement for a vehicular device according to the invention;
- FIG 5: shows schematically a further exemplary embodiment of an omnidirectional wheel arrangement for a vehicular device according to the invention;
- FIG 6: shows schematically a further exemplary embodiment of an omnidirectional wheel arrangement for a vehicular device according to the invention;
- FIG 7: shows schematically a further exemplary embodiment of an omnidirectional wheel arrangement for a vehicular device according to the invention;
- FIG 8: shows schematically a further exemplary embodiment of an omnidirectional wheel arrangement for a vehicular device according to the invention;
- FIG 9: shows schematically a part of a further exemplary embodiment of an omnidirectional wheel arrangement for a vehicular device according to the invention;
- FIG 10: shows schematically a part of a further exemplary embodiment of an omnidirectional wheel arrangement for a vehicular device according to the invention; and
- FIG 11: shows schematically a further exemplary embodiment of an omnidirectional wheel arrangement for a vehicular device according to the invention.

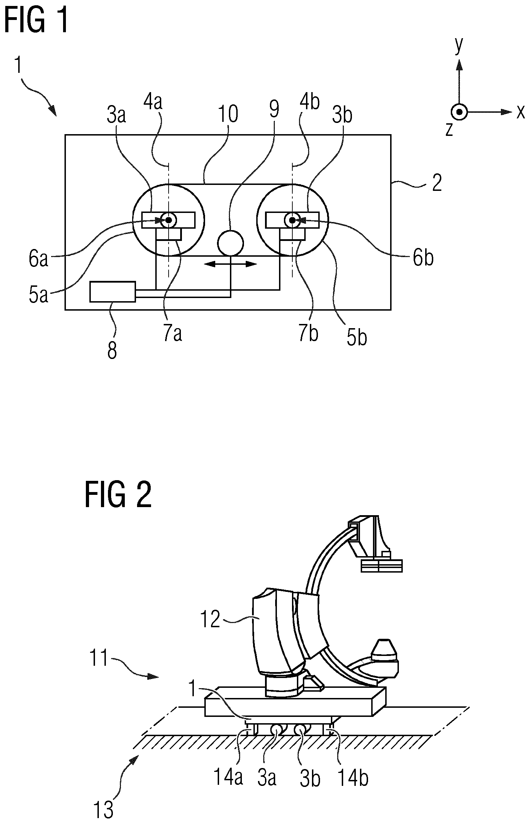

FIG 1 shows schematically an exemplary embodiment of an omnidirectional wheel arrangement 1 for a vehicular device according to the invention.

The omnidirectional wheel arrangement 1 comprises a carrier 2 for mounting the omnidirectional wheel arrangement 1 to the vehicular device 11, a first wheel 3a with a first wheel axis 4a, a second wheel 3b with a second wheel axis 4b, and a propulsion drive system, which is configured to drive the first wheel 3a and the second wheel 3b individually to rotate around the first wheel axis 4a and the second wheel axis 4b, respectively. In the example of FIG 1, the first wheel 3a and the second wheel 3b are mounted at the carrier 2 such that the first wheel axis 4a and the second wheel axis 4b are parallel to an x-y-plane of a predefined Cartesian coordinate system. In the depicted state, the first wheel axis 4a and the second wheel axis 4b are parallel to a y-axis of the coordinate system.

In particular, the propulsion drive system comprises a first motor 7a arranged and configured to drive the first wheel 3a to rotate around the first wheel axis 4a and a second motor 7b arranged and configured to drive the second wheel 3b to rotate around the second wheel axis 4b. The first motor 7a and the second motor 7b are, in particular, controlled by a motor controller 8 of the omnidirectional wheel arrangement 1. The first motor 7a and the second motor 7b are for example step motors or servo motors.

The first wheel 3a is mounted to the carrier 2 such that the first wheel 3a is rotatable around a first steering axis 6a, the second wheel 3b is mounted to the carrier 2 such that the second wheel 3b is rotatable around a second steering axis 6b, and the omnidirectional wheel arrangement 1 comprises a steering drive system which is configured to rotate the first wheel 3a around the first steering axis 6a and the second wheel 3b around the second steering axis 6b. The second steering axis 6b is different from and parallel to the first steering axis 6a. The first steering axis 6a is perpendicular to the first wheel axis 4a and the second steering axis 6b is perpendicular to the second wheel axis 4b. In the example of FIG 1, the first steering axis 6a and the second steering axis 6b are parallel to a z-axis of the coordinate system.

In particular, the steering drive system comprises a further motor 9 arranged and configured to drive the first wheel 3a and the second wheel 3b to rotate around the first steering axis 6a and the second steering axis 6b, respectively. The further motor 9 is for example a step motor or a servo motor.

For example, the first wheel 3a may be mounted at a first rotatable platform 5a and the second wheel 3b may be mounted at a second rotatable platform 5b and the steering drive system 9 is configured to rotate the first rotatable platform 5a and the second rotatable platform 5b in order to rotate the first wheel 3a and the second wheel 3b accordingly around their steering axes 6a, 6b.

The first wheel 3a and the second wheel 3b are coupled to each other by a mechanical coupling element 10 of the steering drive system to enforce that the first wheel axis 4a and the second wheel axis 4b are parallel to each other. The mechanical coupling element 10 may for example be implemented as a transmission belt or a transmission chain. In the example of FIG 1, the further motor 9 is for example arranged and configured to drive the mechanical coupling element 10 and thereby the rotatable platforms 5a, 5b and the wheels 3a, 3b. In alternative embodiments, however, the further motor 9 may be arranged to drive directly the first wheel 3a or the second wheel 3b.

FIG 2 shows schematically an exemplary embodiment of a vehicular device 11 according to the invention, which is placed on a ground surface 13 and comprises an omnidirectional wheel arrangement 1 according to the invention, wherein the carrier 2 is mounted to the vehicular device 11.

In the example of FIG 2, the vehicular device 11 comprises is a mobile medical device, in particular a mobile C-arm device 12, which is mounted to the carrier 2. In alternative embodiments, the vehicular device 11 may for example be a hospital bed or a patient table or a robotic system for medical interventions.

For example, the omnidirectional wheel arrangement 1 may comprise at least one support element 14a, 14b for supporting the omnidirectional wheel arrangement 1 on the ground surface. The support elements 14a, 14b may for example be designed as further wheels or gliders et cetera.

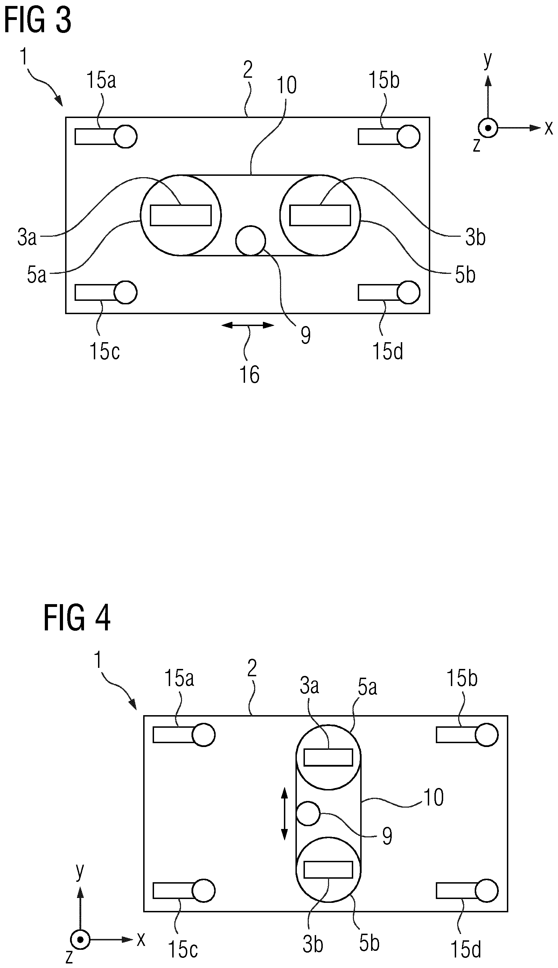

FIG 3 shows schematically a further exemplary embodiment of an omnidirectional wheel arrangement 1 for a vehicular device according to the invention, which is based on the embodiment described with respect to FIG 1.

In the embodiment of FIG 3, the omnidirectional wheel arrangement 1 comprises four further wheels 15a, 15b, 15c, 15d as support elements. The further wheels 15a, 15b, 15c, 15d are mounted to the carrier 2 and, for example, each further wheel 15a, 15b, 15c, 15d is a passive wheel and, for example, is rotatable around a respective further steering axis, which is parallel to the first steering axis 6a and the second steering axis 6b. The further wheels 15a, 15b, 15c, 15d are for example arranged at respective corners of a rectangle. In particular, the first wheel 3a and the second wheel 3b are arranged symmetrically with respect to a center of the rectangle.

FIG 4 shows schematically a further exemplary embodiment of an omnidirectional wheel arrangement 1 for a vehicular device according to the invention, which is based on the embodiment described with respect to FIG 3.

The embodiments of FIG 3 and FIG 4 differ in the arrangement of the first wheel 3a and the second wheel 3b with respect to a preferred travel direction 16 of the vehicular device, which is chosen to be parallel to an x-axis of the coordinate system as an example. While the first and the second wheel 3a, 3b are arranged in a linear fashion along the preferred travel direction 16 in FIG 3, they are arranged at the same position along the preferred travel direction 16 in FIG 4. In other words, the respective centers of the wheels 3a, 3b have the same y-coordinate and different x-coordinates in FIG 3, they have the same x-coordinate and different y-coordinates in

FIG 4. Which arrangement is more suitable depends for example on the actual type and/or use case of the vehicular device. In particular, the omnidirectional wheel arrangement 1 is rotatable on the spot immediately without any delay in case the first wheel axis 4a and the second wheel axis 4b coincide as it is the case for example for the state of the wheels 3a, 3b shown in FIG 4 but not for the state of the wheels 3a, 3b shown in FIG 3.

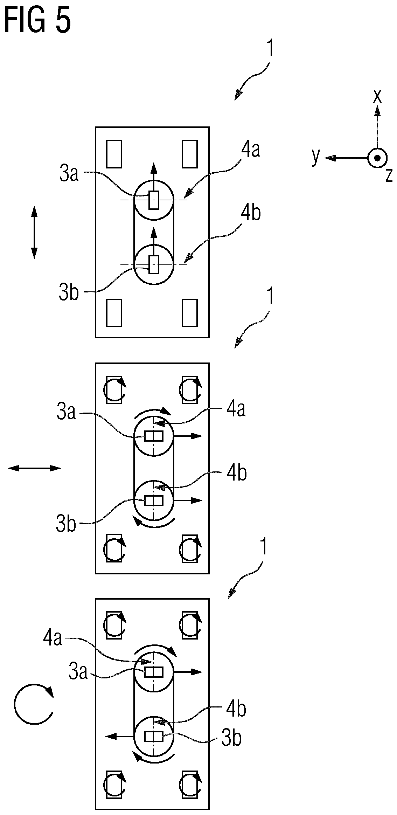

FIG 5 shows schematically the omnidirectional wheel arrangement 1 of FIG 3 in three different states of the first wheel 3a and the second wheel 3b.

In the upper picture, the first wheel 3a and the second wheel 3b are oriented such that the first wheel axis 4a and the second wheel axis 4b are parallel to the y-axis. Both wheels 3a, 3b rotate around the respective wheel axis 4a, 4b in the same direction with the same speed. Thus, the resulting propulsion force moves the omnidirectional wheel arrangement 1 and, in particular, the vehicular device 11 parallel to the x-axis.

In the middle picture, the first wheel 3a and the second wheel 3b are oriented such that the first wheel axis 4a and the second wheel axis 4b are parallel to the x-axis. Both wheels 3a, 3b rotate around the respective wheel axis 4a, 4b in the same direction with the same speed. Thus, the resulting propulsion force moves the omnidirectional wheel arrangement 1 and, in particular, the vehicular device 11 parallel to the y-axis.

In the lower picture, the first wheel 3a and the second wheel 3b are oriented such that the first wheel axis 4a and the second wheel axis 4b are parallel to the x-axis. Both wheels 3a, 3b rotate around the respective wheel axis 4a, 4b in opposite directions with the same speed. Thus, there is no resulting net propulsion force but a resulting torque, which rotates the omnidirectional wheel arrangement 1 and, in particular, the vehicular device 11 on the spot around the z-axis.

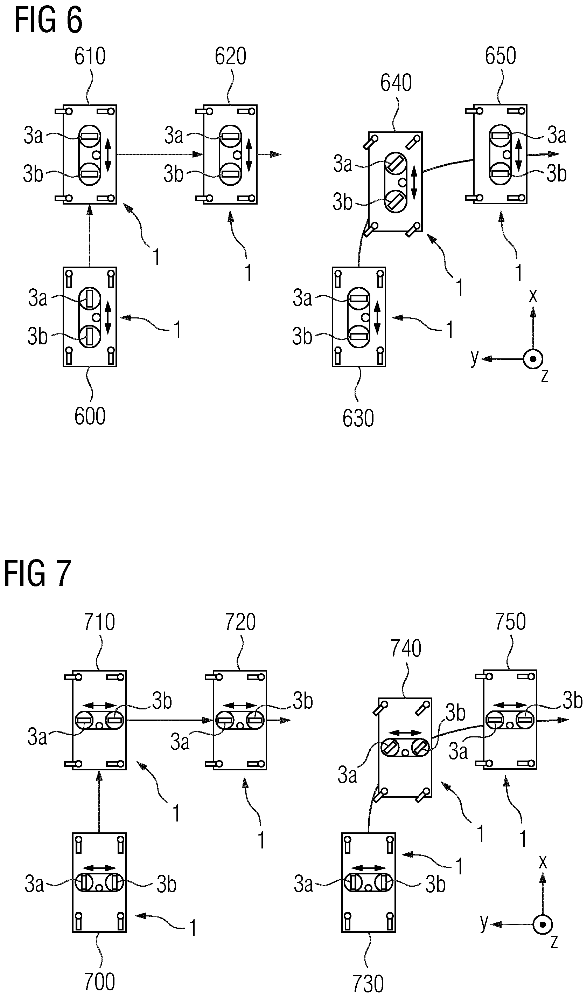

FIG 6 shows schematically the omnidirectional wheel arrangement 1 of FIG 3 in two different motion sequences.

On the left side, in an initial position 600, the first wheel 3a and the second wheel 3b are in the state as described with respect to the upper picture in FIG 5. Both wheels 3a, 3b rotate around the respective wheel axis 4a, 4b in the same direction with the same speed. The omnidirectional wheel arrangement 1 and, in particular, the vehicular device 11 therefore travels straight forward to position 610. Then, the first wheel 3a and the second wheel 3b are rotated around their steering axes 6a, 6b such that the state as described with respect to the middle picture in FIG 5 is reached. The omnidirectional wheel arrangement 1 and, in particular, the vehicular device 11 therefore travels straight to the right to the final position 620.

On the right side, in an initial position 630, the first wheel 3a and the second wheel 3b are in the state as described with respect to the upper picture in FIG 5. The omnidirectional wheel arrangement 1 and, in particular, the vehicular device 11 therefore travels forward but while driving forward, the first wheel 3a and the second wheel 3b are gradually rotated around their steering axes 6a, 6b such that the state as described with respect to the middle picture in FIG 5 is reached in the final position 650. Both wheels 3a, 3b rotate around the respective wheel axis 4a, 4b in the same direction with the same speed. The omnidirectional wheel arrangement 1 and, in particular, the vehicular device 11 therefore travels along a right curve. During this, the first wheel 3a and the second wheel 3b are in an intermediate state in intermediate positions 640.

FIG 7 shows schematically the omnidirectional wheel arrangement 1 of FIG 4 in two different motion sequences.

On the left side, in an initial position 700, the first wheel 3a and the second wheel 3b are oriented such that the first wheel axis 4a and the second wheel axis 4b are parallel to the y-axis. Both wheels 3a, 3b rotate around the respective wheel axis 4a, 4b in the same direction with the same speed. The omnidirectional wheel arrangement 1 and, in particular, the vehicular device 11 therefore travels straight forward to position 710. Then, the first wheel 3a and the second wheel 3b are rotated around their steering axes 6a, 6b such that the first wheel 3a and the second wheel 3b are oriented such that the first wheel axis 4a and the second wheel axis 4b are parallel to the x-axis. Both wheels 3a, 3b rotate around the respective wheel axis 4a, 4b in the same direction with the same speed. The omnidirectional wheel arrangement 1 and, in particular, the vehicular device 11 therefore travels straight to the right to the final position 720.

On the right side, in an initial position 730, the first wheel 3a and the second wheel 3b are oriented such that the first wheel axis 4a and the second wheel axis 4b are parallel to the y-axis. Both wheels 3a, 3b rotate around the respective wheel axis 4a, 4b in the same direction with the same speed. The omnidirectional wheel arrangement 1 and, in particular, the vehicular device 11 therefore travels forward but while driving forward, the first wheel 3a and the second wheel 3b are gradually rotated around their steering axes 6a, 6b such that the first wheel 3a and the second wheel 3b are oriented such that the first wheel axis 4a and the second wheel axis 4b are parallel to the x-axis in the final position 750. The omnidirectional wheel arrangement 1 and, in particular, the vehicular device 11 therefore travels along a right curve. During this, the first wheel 3a and the second wheel 3b are in an intermediate state in intermediate positions 740.

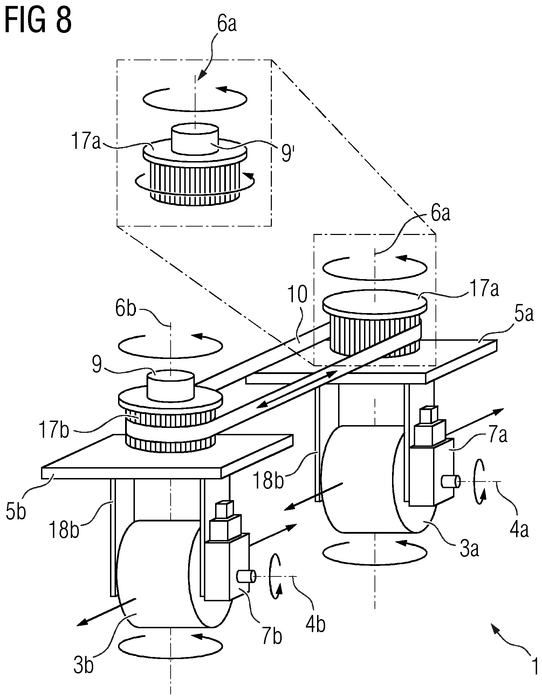

FIG 8 shows schematically a further exemplary embodiment of an omnidirectional wheel arrangement for a vehicular device according to the invention, which is based on the embodiment of FIG 1, without showing the carrier 2.

In the embodiment of FIG 8, the first motor 7a and the second motor 7b are mounted directly at respective hubs of the first wheel 3a and the second wheel 3b, respectively. The first wheel 3a and the second wheel 3b are for example mounted to the first rotatable platform 5a and the second rotatable platform 5b, respectively, via respective suspension elements 18a, 18b.

In the embodiment of FIG 8, a first roller 17a and a second roller 17b are mounted on the rotatable platforms 5a, 5b opposite to the respective wheel 3a, 3b. When the first roller 17a is rotated around the first steering axis 6a, then also the combination of the rotatable platform 5a, the suspension elements 18a and the first wheel 3a are rotated around the first steering axis 6a. When the second roller 17b is rotated around the second steering axis 6b, then also the combination of the rotatable platform 5b, the suspension elements 18b and the second wheel 3b is rotated around the first steering axis 6a.

The steering drive system comprises for example a single further motor 9, for example a step motor or a servo motor, which is arranged directly at the hub of the second roller 17b. The steering drive system comprises a mechanical coupling element 10, for example a timing belt, which couples the first roller 17a and the second roller 17b to each other and thereby enforces that the first wheel axis 4a and the second wheel axis 4b are parallel to each other. Alternatively, the single further motor 9 is arranged directly at the hub of the first roller 17a.

As indicated in FIG 8, it may be provided in further embodiments that the steering drive system comprises the further motor 9, which is arranged directly at the hub of the second roller 17b, and a further motor 9', which is arranged directly at the hub of the first roller 17a. In this case, the mechanical coupling element 10 is not required. The motor controller 8 may then control both further motors 9, 9' such that the first wheel axis 4a and the second wheel axis 4b are enforced to be parallel to each other.

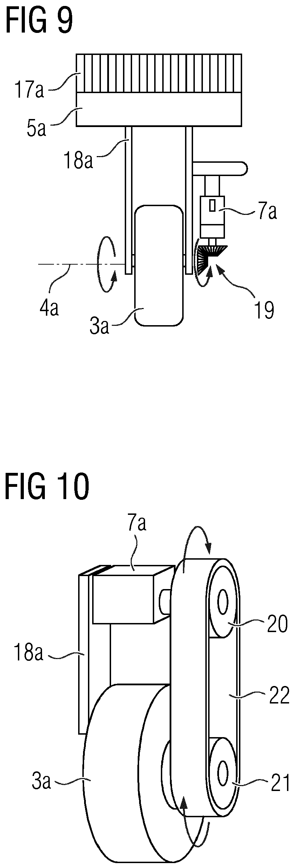

FIG 9 shows an alternative to the arrangement of the first motor 7a directly at the hub of the first wheel 3a. In the variant of FIG 9, the first motor 7a is fastened at the suspension element 18a and a motor shaft of the first motor 7a is coupled to the hub of the first wheel 3a via two bevel gears 19. Also for the second motor 7b, an analog arrangement is possible.

FIG 10 shows a further alternative to the arrangement of the first motor 7a directly at the hub of the first wheel 3a. In the variant of FIG 10, the first motor 7a is fastened at the suspension element 18a. A further roller 20 is fastened to the motor shaft of the first motor 7a and a further roller 21 is fastened to the hub of the first wheel 3a. A further transmission belt 22 couples the further roller 20 and the further roller 21 to each other.

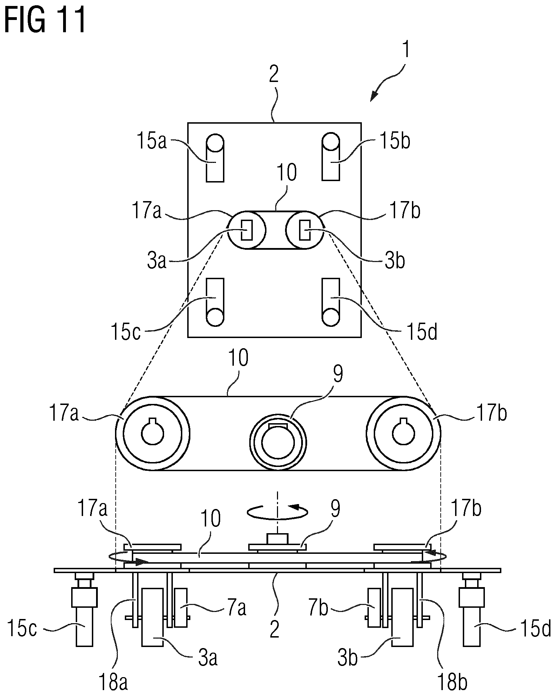

FIG 11 shows schematically a further exemplary embodiment of an omnidirectional wheel arrangement 1 according to the invention, which is based on the embodiment of FIG 4. The omnidirectional wheel arrangement 1 is shown in a top view (upper picture) and a side view (lower picture). Furthermore, a detailed view of the rollers 17a, 17b, the further motor 9, and the mechanical coupling element 10 is shown (middle picture).

As described, the omnidirectional wheel arrangement according to the invention overcomes drawbacks of other concepts for omnidirectional drive systems, for example such based on Ilon wheels.

A drawback of Ilon wheels is a phase shift of the small rollers between the wheels, which is overcome by the omnidirectional wheel arrangement according to the invention since only a single roller per wheel is required. Furthermore, for Ilon wheels, a simultaneous and even ground contact of the rollers of each wheel cannot be guaranteed, which may disturb straight lateral travel.

Furthermore, in several embodiments of the omnidirectional wheel arrangement according to the invention, a delay in the directional adjustment in the event of undynamic direction changes can be avoided.

In several embodiments, only three motors overall are required to enable movement in three degrees of freedom including two translational degrees of freedom and one rotational degree of freedom.

Independent of the grammatical term usage, individuals with male, female or other gender identities are included within the term.

## Claims

1. Omnidirectional wheel arrangement (1) for a vehicular device (11) wherein
- the omnidirectional wheel arrangement (1) comprises a carrier (2) for mounting the omnidirectional wheel arrangement (1) to the vehicular device (11), a first wheel (3a) with a first wheel axis (4a), a second wheel (3b) with a second wheel axis (4b), and a propulsion drive system (7a, 7b, 19, 20, 21, 22), which is configured to drive the first wheel (3a) and the second wheel (3a) individually to rotate around the first wheel axis (4a) and the second wheel axis (4b), respectively;
- the first wheel (3a) is mounted to the carrier (2) such that the first wheel (3a) is rotatable around a first steering axis (6a), the second wheel (3b) is mounted to the carrier (2) such that the second wheel (3b) is rotatable around a second steering axis (6b), and the omnidirectional wheel arrangement (1) comprises a steering drive system (9, 9', 10, 17a, 17b), which is configured to rotate the first wheel (3a) around the first steering axis (6a) and the second wheel (3b) around the second steering axis (6b);
- the second steering axis (6b) is different from and parallel to the first steering axis (6a), the first steering axis (6a) is perpendicular to the first wheel axis (4a), and the second steering axis (6b) is perpendicular to the second wheel axis (4b);
- the first wheel (3a) and the second wheel (3b) are coupled to each other by the steering drive system (9, 9', 10, 17a, 17b) to enforce that the first wheel axis (4a) and the second wheel axis (4b) are parallel to each other.

2. Omnidirectional wheel arrangement (1) according to claim 1, wherein
- the propulsion drive system (7a, 7b, 19, 20, 21, 22) comprises a first motor (7a) arranged and configured to drive the first wheel (3a) and a second motor (7b) arranged and configured to drive the second wheel (3b); and/or
- the steering drive system (9, 9', 10, 17a, 17b) comprises at least one further motor (9, 9') arranged and configured to drive the first wheel (3a) and the second wheel (3b) to rotate around the first steering axis (6a) and the second steering axis (6b), respectively.

3. Omnidirectional wheel arrangement (1) according to one of the preceding claims, wherein the first steering axis (6a) intersects the first wheel axis (4a) and/or the second steering axis (6b) intersects the second wheel axis (4b).

4. Omnidirectional wheel arrangement (1) according to one of the preceding claims, wherein the steering drive system (9, 9', 10, 17a, 17b) is configured to rotate the first wheel (3a) and the second wheel (3b) individually around the first steering axis (6a) and the second steering axis (6b), respectively, such that it is enforced that the first wheel axis (4a) and the second wheel axis (4b) are parallel to each other.

5. Omnidirectional wheel arrangement (1) according to one of the preceding claims, wherein the steering drive system (9, 9', 10, 17a, 17b) comprises a mechanical coupling element (10), which couples the first wheel (3a) and the second wheel (3b) to each other to enforce that the first wheel axis (4a) and the second wheel axis (4b) are parallel to each other.

6. Omnidirectional wheel arrangement (1) according to claim 5, wherein the mechanical coupling element (10) comprises a transmission belt or a transmission chain or a gearbox or a Cardan shaft.

7. Omnidirectional wheel arrangement (1) according to one of claims 5 or 6, wherein
- the omnidirectional wheel arrangement (1) comprises a first roller or gear (17a) mounted to the carrier (2) such that the first roller or gear (17a) is rotatable around the first steering axis (6a) and the first roller or gear (17a) is mechanically coupled to the first wheel (3a) such that a rotation of the first roller or gear (17a) around the first steering axis (6a) causes the first wheel (3a) to rotate around the first steering axis (6a);
- the omnidirectional wheel arrangement (1) comprises a second roller or gear (17b) mounted to the carrier (2) such that the second roller or gear (17b) is rotatable around the second steering axis (6b) and the second roller or gear (17b) is mechanically coupled to the second wheel (3b) such that a rotation of the second roller or gear (17b) around the second steering axis (6b) causes the second wheel (3b) to rotate around the second steering axis (6b);
- the mechanical coupling element (10) comprises the transmission belt or the transmission chain, which couples the first roller or gear (17a) and the second roller or gear (17b) to each other to enforce that the first wheel axis (4a) and the second wheel axis (4b) are parallel to each other; and
- the steering drive system (9, 9', 10, 17a, 17b) is configured to drive the first roller or gear (17a) to rotate around the first steering axis (6a) or to drive the second roller or gear (17b) to rotate around the second steering axis (6b) or to drive the mechanical coupling element (10).

8. Omnidirectional wheel arrangement (1) according to one of the preceding claims, wherein the first wheel (3a) is mounted floatingly or spring-mounted at the carrier (2) and/or the second wheel (3b) is mounted floatingly or spring-mounted at the carrier (2).

9. Omnidirectional wheel arrangement (1) according to one of the preceding claims comprising at least one support element (14a, 14b, 15a, 15b, 15c, 15d) for supporting the omnidirectional wheel arrangement (1) on a ground surface (13).

10. Omnidirectional wheel arrangement (1) according to one of the preceding claims comprising at least one further wheel (15a, 15b, 15c, 15d) mounted to the carrier (2), wherein each further wheel (15a, 15b, 15c, 15d) is a passive wheel and is rotatable around a respective further steering axis, which is parallel to the first steering axis (6a).

11. Omnidirectional wheel arrangement (1) according to claim 10, wherein the at least one further wheel (15a, 15b, 15c, 15d) comprises three or four further wheels (15a, 15b, 15c, 15d).

12. Omnidirectional wheel arrangement (1) according to claim 11, wherein
- the three or four further wheels (15a, 15b, 15c, 15d) are arranged at respective corners of a rectangle; and
- the first wheel (3a) and the second wheel (3b) are arranged symmetrically with respect to a center of the rectangle.

13. Vehicular device (11) comprising an omnidirectional wheel arrangement (1) according to one of the preceding claims, wherein the carrier (2) is mounted to the vehicular device (11).

14. Vehicular device (11) according to claim 13, which is a mobile medical device or a hospital bed or a mobile medical imaging device (12) or a patient table or a robotic system for medical interventions.

15. Vehicular device (11) according to one of claims 13 or 14, wherein
- the omnidirectional wheel arrangement (1) is implemented according to one of claims 10 to 12;
- the first wheel (3a) and the second wheel (3b) and the at least one further wheel is mounted at the carrier (2) such that, when the vehicular device (11) is placed on a ground surface (13) such that the first wheel (3a) and the second wheel (3b) and the at least one further wheel are in contact with the ground surface (13), a mechanical load on the first wheel (3a) due to a weight of the vehicular device (11) is less than a mechanical load on each further wheel and/or a mechanical load on the second wheel (3b) due to the weight of the vehicular device (11) is less than the mechanical load on each further wheel.
